# EUROPEAN PATENT APPLICATION

(11) **EP 1 093 065 A2**
(43) Date of publication of application: **18.04.2001**
(21) Application number: 00121368.5
(22) Date of filing: 11.10.2000
(51) Int. Cl.: G06F 17/60

(54) **Service transaction information processing system**

(30) Priority: 12.10.1999 JP 28985699
(71) Applicant: TSUBASA SYSTEM CO. LTD., Tokyo (JP)
(72) Inventor: Suzuki, Hiromi, Koutou-ku, Tokyo (JP)
(74) Representative: Modiano, Guido, Dr.-Ing.

(57) **Abstract**

A service transaction information processing system comprises a database for storing course classification data for indicating categories of service targets, and service course data for indicating a content of the service and assets used for the service, a first terminal device, a second terminal device and a data transmission medium. The first terminal device includes an input module for inputting identification data of the service target, and a course selection module for selecting a course classification with respect to the service target, and selecting a service course corresponding to the selected course classification from the service course data. The second terminal device includes a service target selection module for displaying the service target inputted in the first terminal device and selecting a specified service target, a course display module for displaying a content of the service course corresponding to the specified service target selected by the service target selection module, and a completion data input module for inputting completion-of-service data for indicating that a service corresponding to the specified service target is completed. The data transmission medium connects the database, the first terminal device and the second terminal device to each other. Based on this architecture, a service menu corresponding to a category of the service target can be properly offered as a transaction.

## Description

### BACKGROUND OF THE INVENTION

The present invention relates generally to a service transaction information processing system for managing a transaction of service goods that is constructed of a plurality of goods (assets) and services, and more particularly to a service transaction information processing system capable of properly offering a service menu, as a transaction, corresponding to a category of a service target.

When a service target other than a human being is, e.g., an automobile, normally there is offered a service menu (an oil exchange, a tire exchange etc) corresponding to a type of the service target automobile (such as a gasoline car, a diesel car, a hybrid car etc). That is, if the automobile concerned is classified as the gasoline car, it is undesirable that a gasoline-car-oriented service menu be selected for other types of cars, e.g., the diesel car.

There has hitherto existed an order processing system in a restaurant etc where a service target is a customer, however, this system deals with such a service transaction that the customer is able to select all the service menus and is therefore hard to be applied to the automobiles etc.

### SUMMARY OF THE INVENTION

Accordingly, it is a primary object of the present invention to provide a service transaction information processing system and a method thereof, which are capable of properly offering, as a transaction, a service menu corresponding to a category of a service target.

To accomplish the above object, a first service transaction information processing system according to the present invention comprises a database for storing course classification data for indicating categories of service targets, and service course data for indicating a content of the service and assets used for the service, a first terminal device including an input module for inputting identification data of the service target, and a course selection module for selecting a course classification with respect to the service target, and selecting a service course corresponding to the selected course classification from the service course data, a second terminal device including a service target selection module for displaying the service target inputted in the first terminal device and selecting a specified service target, a course display module for displaying a content of the service course corresponding to the specified service target selected by the service target selection module, and a completion data input module for inputting completion-of-service data for indicating that a service corresponding to the specified service target is completed, and a data transmission medium for connecting the database, the first terminal device and the second terminal device to each other.

In this architecture, the first terminal device may further include a display module for displaying data about the specified service target corresponding to the completion-of-service data inputted in the second terminal device, and an accounting module for selecting the specified service target displayed on the display module and performing accounting of a service transaction.

The first terminal device may be disposed at a front in a service transaction shop, and the second terminal device may be disposed in an operation pit in the service transaction shop.

A second service transaction information processing system according to the present invention comprises a database for storing course classification data for indicating categories of service targets, and service course data for indicating a content of the service and assets used for the service, a first terminal device including an input module for inputting identification data of the service target, and a course selection module for selecting a course classification with respect to the service target, and selecting a service course corresponding to the selected course classification from the service course data, a second terminal device including a service target selection module for displaying the service target inputted in the first terminal device and selecting a specified service target, a course display module for displaying a content of the service course corresponding to the specified service target selected by the service target selection module, and a completion data input module for inputting completion-of-service data for indicating that a service corresponding to the specified service target is completed, a third terminal device including a display module for displaying data about the specified service target corresponding to the completion-of-service data inputted in the second terminal device, and an accounting module for selecting the specified service target displayed on the display module and performing accounting of a service transaction, and a data transmission medium for connecting the database, the first terminal device, the second terminal device and the third terminal device to each other.

In this architecture, the first terminal device and the third terminal device may be disposed at a front in a service transaction shop, and the second terminal device may be disposed in an operation pit in the service transaction shop.

A third service transaction information processing system according to the present invention comprises a database for storing course classification data for indicating categories of service targets, and service course data for indicating a content of the service and assets used for the service, a first terminal device including an input module for inputting identification data of the service target, and a course selection module for selecting a course classification with respect to the service target, and selecting a service course corresponding to the selected course classification from the service course data, a service target selection module for displaying the service target inputted and selecting a specified service target, a course display module for displaying a content of the service course corresponding to the specified service target selected by the service target selection module, and a completion data input module for inputting completion-of-service data for indicating that a service corresponding to the specified service target is completed, a second terminal device including a display module for displaying data about the specified service target corresponding to the completion-of-service data inputted in the first terminal device, and an accounting module for selecting the specified service target displayed on the display module and performing accounting of a service transaction, and a data transmission medium for connecting the database, the first terminal device and the second terminal device to each other.

In this architecture, the first terminal device and the second terminal device may be disposed in an operation pit in a service transaction shop.

According to the present invention, there is provided a service transaction information processing method in a system including a database for storing course classification data for indicating a type of a service target car and service course data for showing a content of the service and an asset used in the service, at least one terminal device disposed at least one of a customer corresponding place and a car corresponding place in a service transaction shop, and a data transmission medium for connecting the database and the terminal device, this method comprising a first step of inputting identification data for specifying the service target car, a second step of selecting the course classification with respect to the service target, and selecting a service course corresponding to the selected course classification from the service course data, a third step of displaying the inputted service target and selecting a specified service target, a fourth step of displaying a content of the service course corresponding to the specified service target selected in the third step, and a fifth step of inputting completion-of-service data for indicating that the service corresponding to the specified service target is completed.

In this architecture, the service transaction information processing system may further comprise a sixth step of displaying data of the specified service target corresponding to the completion-of-service data inputted in said fifth step, and a seventh step of performing accounting a service transaction by selecting the specified service target displayed.

In each of the architectures given above, the service transaction shop may be any one of an oil shop, a oil supplier and a car goods shop.

### BRIEF DESCRIPTION OF THE DRAWINGS

These objects and advantages of the present invention will become more apparent and more readily appreciated from the following detailed description of the presently preferred exemplary embodiments, taken in conjunction with the accompanying drawings of which:
FIG. 1 is a block diagram showing an architecture of a service transaction information processing system in one embodiment of the present invention;
FIG. 2 is a diagram showing an example of layout of the service transaction information processing system in a service transaction shop;
FIG. 3 is a diagram showing a general processing flow in the service transaction information processing system;
FIG. 4 is a diagram showing one example of a menu screen;
FIG. 5 is a diagram showing one example of a receipt screen (receipt data);
FIG. 6 is a diagram showing one example of a receipt screen (personal data);
FIG. 7 is a diagram showing one example of a receipt screen (customer/car data guide);
FIG. 8 is a diagram showing one example of a course selection screen;
FIG. 9 is a diagram showing one example of a parts search screen;
FIG. 10 is a diagram showing one example of a hysteresis display screen;
FIG. 11 is a diagram showing one example of a hysteresis details screen;
FIG. 12 is a diagram showing one example of a receipt state reference screen;
FIG. 13 is a diagram showing one example of a car check input screen and a car check inspection item setting screen;
FIG. 14 is a diagram showing one example of an operation content reference screen;
FIG. 15 is a diagram showing one example of an accounting screen; and
FIG. 16 is a diagram showing one example of a result of inspection and details of transaction.

### DETAILED DESCRIPTION OF THE PREFERRED EMBODIMENTS

Embodiments of the present invention will hereinafter be discussed with reference to the accompanying drawings.

### [Architecture of Service Transaction Information Processing System]

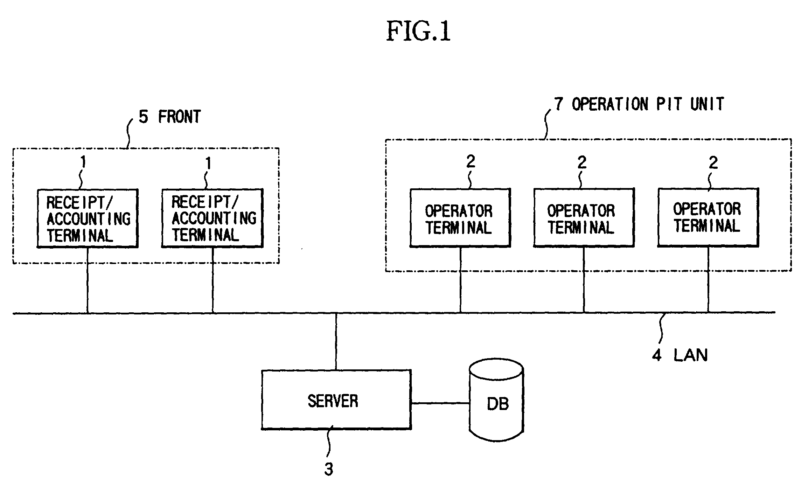

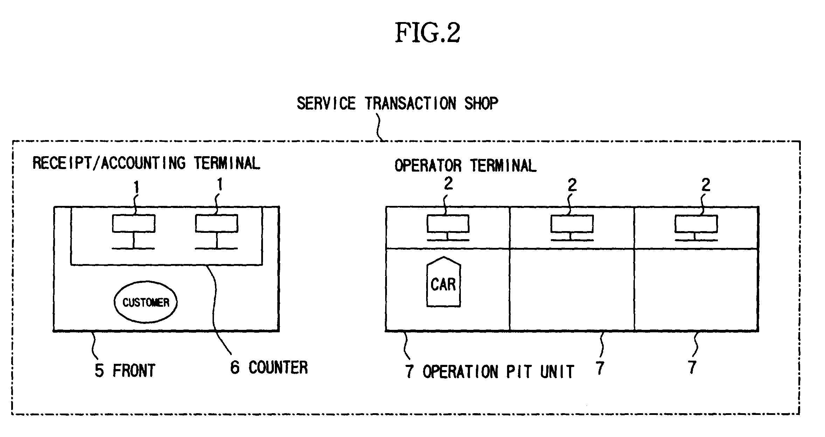

FIG. 1 shows an architecture of a service transaction information processing system in one embodiment of the present invention. Further, FIG. 2 illustrates a layout in this system at a service transaction shop.

The service transaction shop may embrace an oil shop, an oil supplier (gasoline stand), a car goods shop etc. A service transaction in this embodiment will be explained, wherein the service transaction information processing system is disposed in the oil shop.

Referring to FIGS. 1 and 2, this service transaction information processing system includes a plurality of receipt/accounting terminals (first terminal devices) 1, a plurality of operator terminals (second terminal devices) 2, and a server 3 having a database DB. The receipt/accounting terminals 1, the operator terminals 2 and the server 3 are connected to each other via a local area network (LAN) 4.

The plurality of receipt/accounting terminals 1 are disposed at a receipt/accounting counter 6 and used for receipt and accounting operations. Further, each of the plurality of operator terminals 2 is disposed in a pit of an operation pit unit 7, and used for confirming a content of operation for a customer and a car that receive a service (an oil exchanging operation), and for searching a parts stock number.

Each of the receipt/accounting terminal 1 and the operator terminal 2 is classified as a computer terminal such as a personal computer (PC). Further, the operator terminal 2 includes a touch panel type display, which facilitates a mechanical operation by the operator. The receipt/accounting terminal 1 and the operator terminal 2 may be each disposed by only one and used in common. The server 3 having the database DB may be disposed in a proper place.

### [General Processing Flow in Service Transaction Information Processing System]

### 〈Receipt Process/Course Selecting Process〉

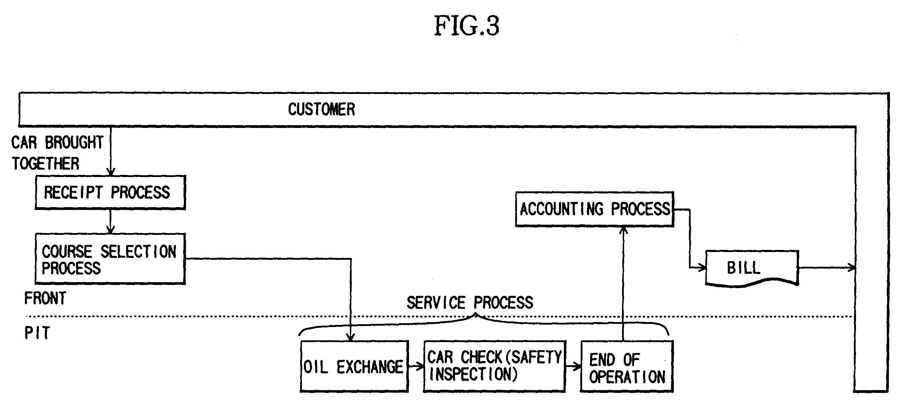

FIG. 3 shows a general processing flow in the service transaction information processing system. Referring to FIG. 3, when a customer with a car comes to a shop, an operator asks the customer to enter a name, an address and a telephone number in a receipt card at the receipt/accounting counter 6 in a front 5. Subsequently, the operator at the receipt/accounting counter 6 inquires a desired service (an operation course) that should be offered, and the course is thus chosen. The operator at the receipt/accounting counter 6 inputs that item of data to the receipt/accounting terminal 1, and registers the receipt data in the server 3 via the LAN 4. The thus registered receipt data are transferred to the operator terminal 2 in the operation pit unit 7 via the LAN 4.

### 〈Service Process〉

The operator (mechanics) in the operation pit unit 7 is able to refer to the receipt data through the operator terminal 2. The operator confirms the content of the operation (oil exchange), searches the parts stock number, refers to a hysteresis and inputs a car check (inspection for safety) with respect to the customer and car through the operator terminal 2 as the necessity may arise, thus implementing the service. When the operator having completed the operation inputs the completion of the operation via the operator terminal 2, this item of data are transferred as an item of waiting-for-accounting receipt data to the receipt/accounting terminal 1.

### 〈Accounting Process〉

The operator of the receipt/accounting terminal 1 prints a bill on the basis of the waiting-for-accounting receipt data transferred from the operator terminal 2, and requests the customer to pay a charge for the service.

### [Operation of Service Transaction Information Processing System]

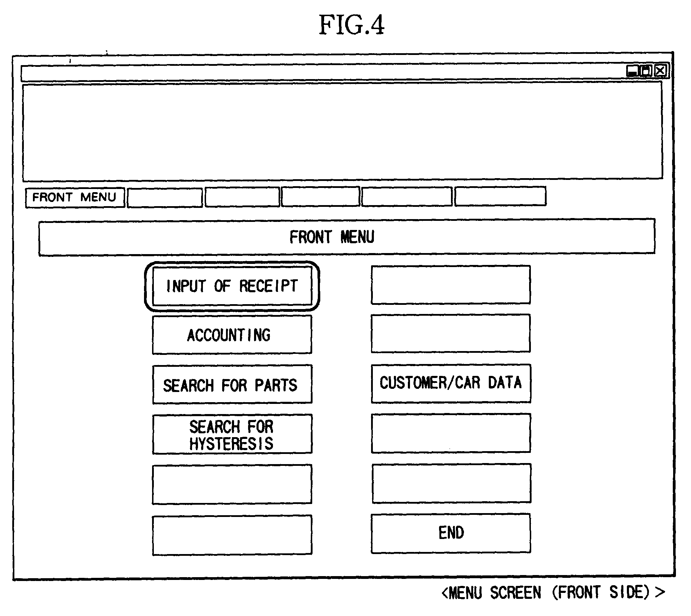

In this service transaction information processing system, the receipt data are registered or modified on [receipt screen] selected from [menu screen] (see FIG. 4) of the receipt/accounting terminal 1. A content of the receipt data consists of customer/car data and an ordered course. The customer/car data and the ordered course inputted on [Receipt Screen] are registered in a receipt database DB. Further, the customer/car data registered or modified on [Receipt Screen] are registered in a customer/car database DB. Moreover, processes such as [Search for Parts], [Search for Hysteresis], [Input of Car Check] and [Accounting] may be executed by shifting from [Receipt Screen] to respective screens desired.

### 〈Receipt Process〉

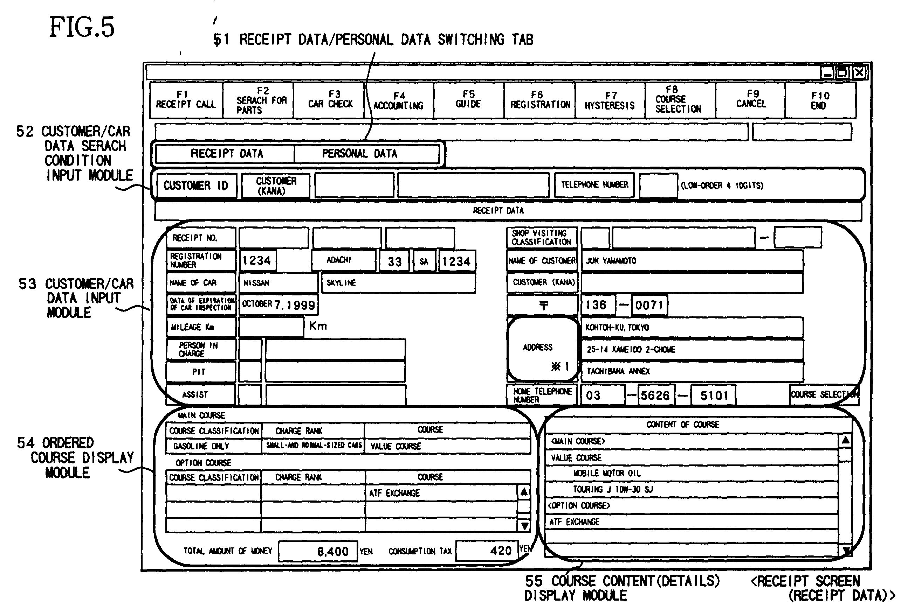

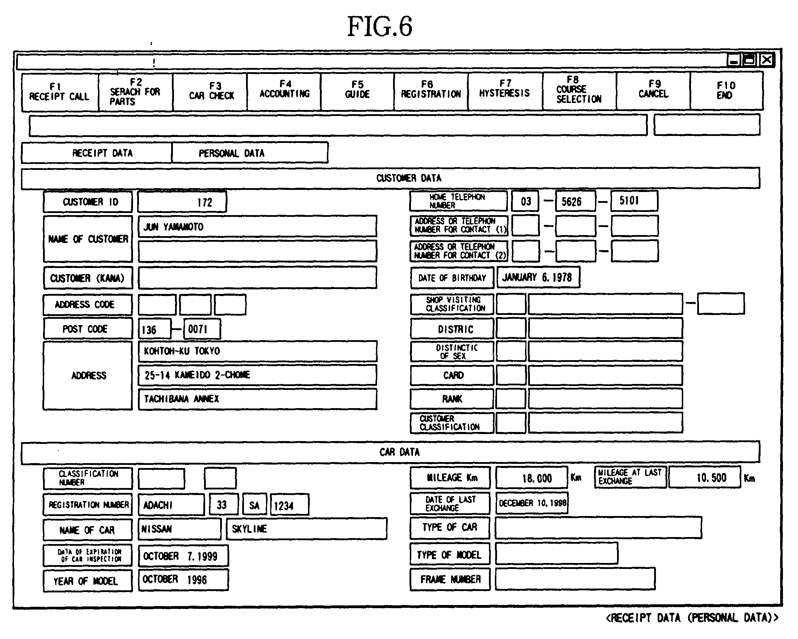

Referring to FIG. 5, on [Receipt Screen (receipt data)] in the receipt/accounting terminal 1, the customer/car data can be registered or modified, and the ordered course given by selecting the course can be inputted. The registered customer/car data and course content are managed on the receipt database DB. On this receipt screen (receipt data), a receipt data/personal data switching tab 51 is a display switching tab for switching over [Receipt Screen (receipt data)] and [Receipt Screen (personal data)] shown in FIG. 6.

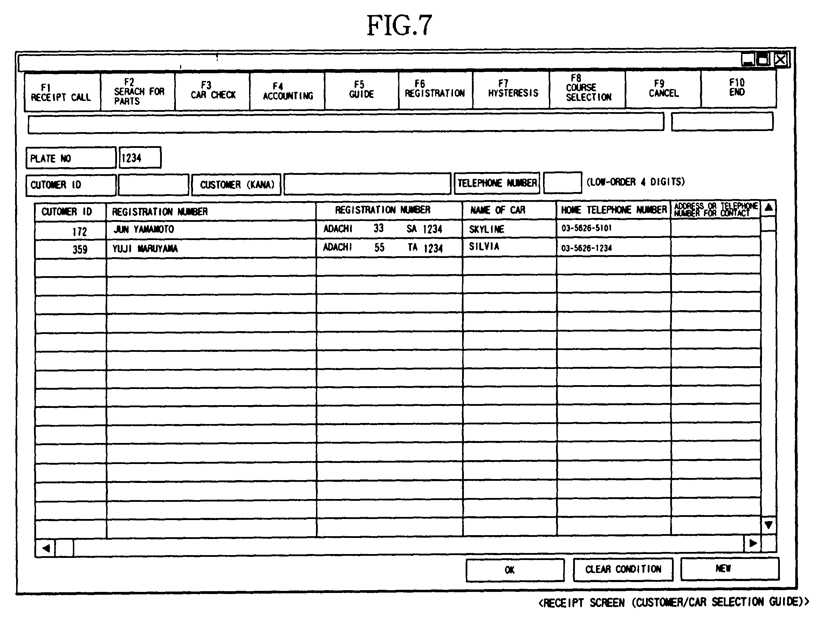

A customer/car data searching condition input module 52 is capable of inputting a call key of the customer/car data or a condition for a fuzzy search. When inputting the search condition, [Receipt Screen (customer/car selection guide)] shown in FIG. 7 is displayed, and the customer/car data can be thus picked up.

In a customer/car data input module 53, respective items of customer/car data can be inputted. The customer/car data input module on [Receipt Screen (receipt data)] is linked to the customer/car data input module on [Receipt Screen (personal data)], whereby the data inputted on any one of these screens become effective on both of the screens. Further, when a check is inputted to [Customer Data Check] on [Customer/Car Data Registration Screen] (not shown), a display of an item [Address] is flickered, thus prompting a modification ( 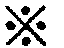 1). In this state, if the address is edited and the customer/car data are overwritten when registering the receipt data, the check on [Customer/Car Data Registration Screen] disappears, and the display of the item [Address] is not flickered from next time.

An ordered course display module 54 displays a main course selected on [Course Selection Screen], an option course, a total amount of money and a consumption tax. A course content (details) display module 55 displays details of each course selected on [Course Selection Screen]. Further, the course content display module 55 displays a stock number of an air/oil element selected on [Parts Selection Screen].

### 〈Course Selecting Process〉

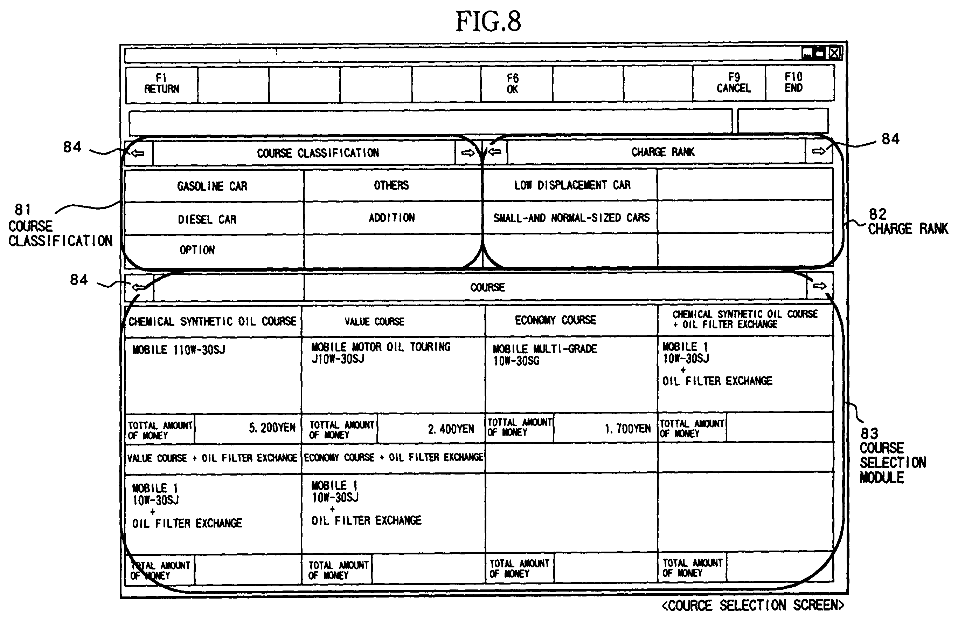

Referring to FIG. 8, on [Course Selection Screen] in the receipt/accounting terminal 1, courses categorized by [Course Classification] 81 and [Charge Rank] 82 are selected and then can be developed. The course classification 81 and the charge rank 82 may be set corresponding to a business situation of each shop. The course has three categories such as a main course (only one course is selectable), an option course 2 (a plurality of courses are selectable with no incentive operation). Further, the charge rank for each course classification may not be set. If choosing the course classification in which no charge rank is set, the course can be selected before choosing the charge rank.

In the course classification 81, the set course classifications, i.e., a gasoline car, a diesel car and an option can be selected. In the charge rank 82, there can be selected the charge ranks, i.e., a low displacement car, small- and normal-sized cars etc set in each course classification. A course selection module 83 is capable of selecting courses set according to the course classification 81 and the charge rank 82, i.e., a chemical synthetic oil course, a value course and an economy course. The respective items of the course classification 81, the charge rank 82 and the course selection module 83 can be switched over in display by depressing a left/right button 84 (mouse clicking).

When selecting the main course on the course selection screen, for example, firstly, [Gasoline Car] is selected as the course classification, and secondly the item [Small- and Normal-Sized Cars] is selected as the charge rank. A list of the course is thereby displayed, and hence a course related to a desired oil exchange, i.e., the value course is selected. As for the main course, only one course is selectable, and, if other course is to be selected, the course previously selected is off the selected state, while a newly selected course comes to the selected state.

Further, when selecting the option course on the course election screen, there is chosen the course classification registered as the option course when setting the course classification 81. In this case, if selecting the course classification with no charge rank 82, the course 83, e.g., [ATF (AT Oil) Exchange] can be selected. Moreover, a plurality of selections can be made in the option course.

### 〈Parts Search Process〉

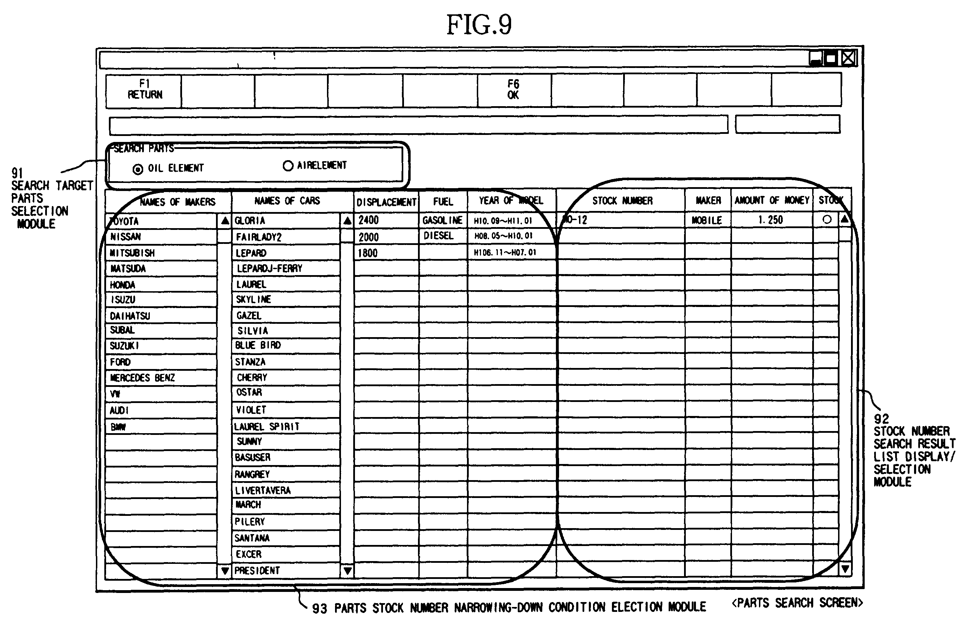

FIG. 9 shows one example of [Parts Search Screen]. Referring to FIG. 9, on this screen in the receipt/accounting terminal 1, stock numbers of an oil element and an air element can be searched. A range of searching the stock number is narrowed down by choosing a name of the maker, a name of the car, a displacement, a fuel and a year of the model, thus searching it. In the case of having searched the parts on the parts search screen, when making a proceeds account of the course using the oil and air elements, an amount of money of the parts with the stock number selected is automatically added.

On the parts search screen, a searching target parts selection module 91 is capable of selecting the parts, viz., the oil element or the air element which will be searched from now on. When choosing the parts, a category of the parts of which the stock number is searched, is changed, and a display on a stock number search result list display/selection module 92 is switched over.

Further, on the parts search screen, a parts stock number narrowing-down condition selection module 93 is capable of selecting the name of the maker, the name of the car, the displacement, the fuel and the year of the model as conditions for searching the parts stock number. It is required in this example that the names of the maker and the car be selected invariably. Then, the narrowing-down search for the parts stock number is executed based on the respective conditions each time other items, i.e., the displacement, the fuel and the year of the model are selected, and a result of this search is displayed on a parts searched result list display/selection module 92.

The parts searched result list display/selection module 92 displays a list of the result of having searched the parts stock number on the basis of the condition selected by the parts stock number narrowing-down condition selection module 93. In an item [Stock] on the display/selection module 92, whether or not there is a stock of the parts having that stock number is displayed based on a content of a stock master database DB (a result of which is indicated by (○) or (X)). Further, when the parts can be picked up from the list by, e.g., clicking on a function key F6 (OK) button, this is registered in a car database DB as a stock number of the parts used for that car. With this registration in the car database DB, the parts stock number is to be displayed from when implementing the next service without searching the parts.

### 〈Hysteresis Display Process〉

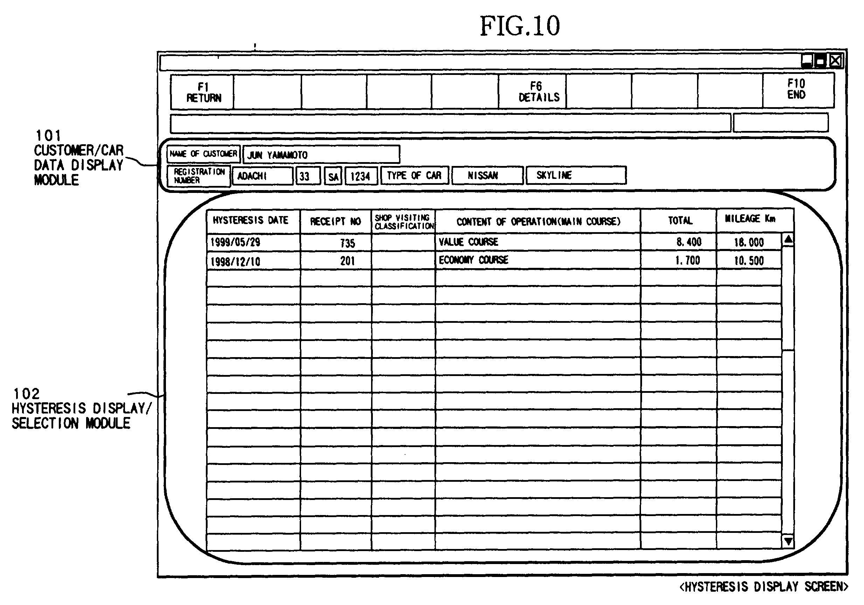

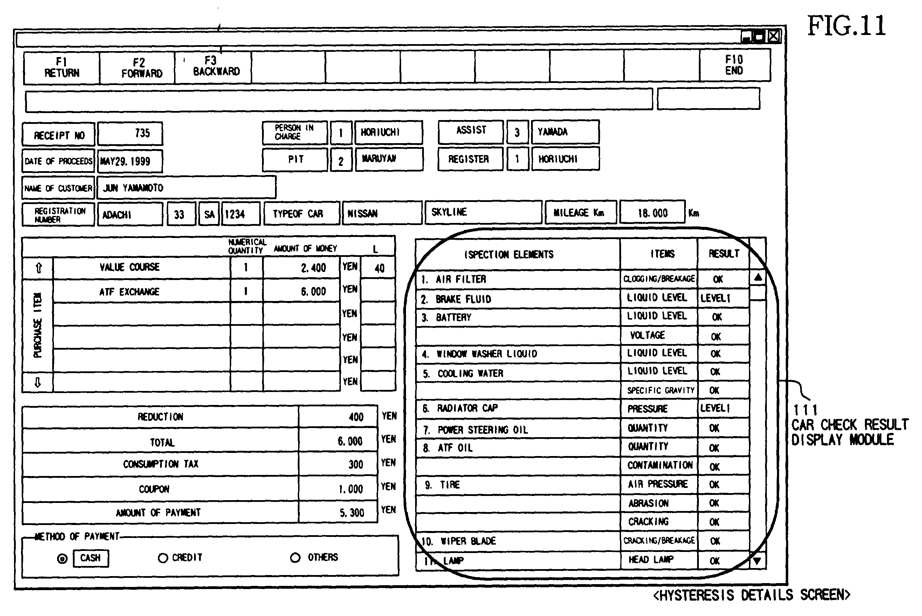

FIG. 10 shows one example of [Hysteresis Display Screen]. Referring to FIG. 10, a hysteresis of proceeds (a content of accounting) and a result of car check can be displayed on this screen in the receipt/accounting terminal 1. A customer/car data display module 101 displays customer/car data of which the hysteresis is to be displayed as a display target. A hysteresis display/selection module 102 displays hysteresis data of the customer and the car displayed on the customer/car data display module 101. When clicking double on a row of each hysteresis, the display on [Hysteresis Details Screen] shown in FIG. 11 is switched over, and a content of accounting of the hysteresis and a result of the car check are displayed.

On this hysteresis details screen, it is feasible to refer to the result of the car check and the accounting content of the hysteresis data selected by the hysteresis display/selection module 102 in the hysteresis display screen. A car check result display module 111 displays the result of the car check when the hysteresis data have been created, and displays in different colors the inspected portions (e.g., a brake fluid, a radiator cap) of which defects have been inputted as the result of the inspection, the items and a row of the result.

### 〈Receipt State Referring Process〉

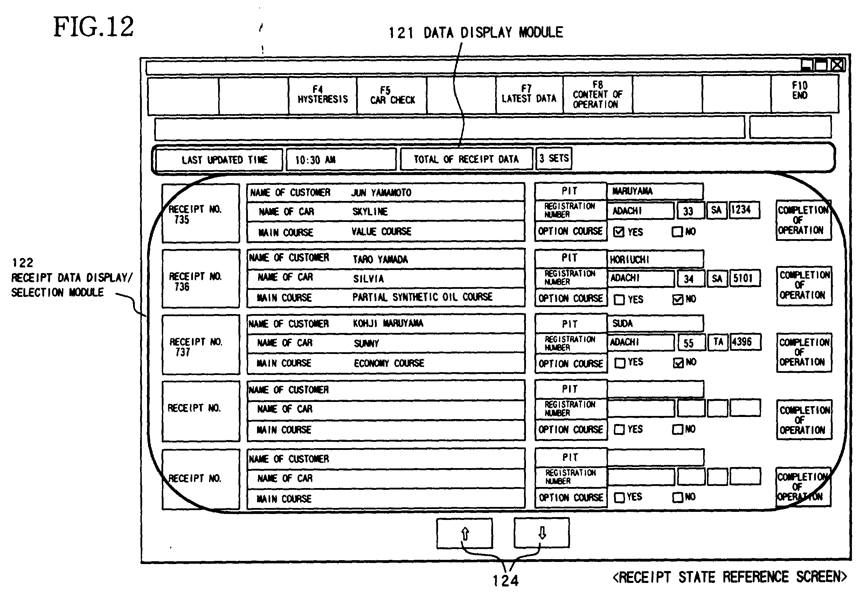

FIG. 12 shows one example of [Receipt State Referring Screen]. Referring to FIG. 12, on this screen in the operator terminal 2, the receipt data are now being registered on [Receipt Screen (receipt data)], and the receipt data of which the accounting is not yet finished can be listed up. The customer/car data received are selected from the list of the receipt state, and the operator is able to easily confirm the content of the operation with respect to the customer/car data, search the parts stock number, refer to the hysteresis and input the car check.

A time when finally updating the receipt state data by use of a function key F7 (latest data) is displayed as [Last Updated Time] of the data display module 121 on a receipt state reference screen. Further, a total number of pieces of receipt data concerned when searching the receipt data by the function key F7 is displayed as [Total of Receipt Data].

A receipt data display/selection module 122 is capable of selecting the receipt data. When clicking on a button with [Receipt No.] displayed which is provided on the left side on the screen, a color of the button changes, and a selected state occurs. Further, when depressing [Completion of Operation] button 123, the corresponding receipt data disappear from this screen, and the waiting-for-accounting receipt data come out. When depressing an up-and-down button 124, the display of the receipt data on the receipt data display/selection module 122 is vertically changed over by one.

### 〈Car Check Input Process〉

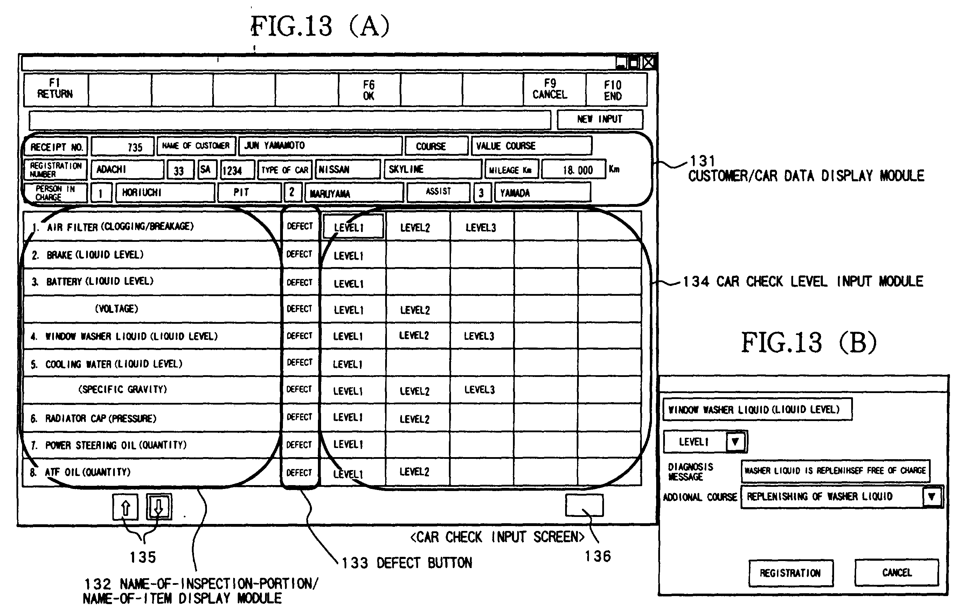

FIGS. 13(A) and 13(B) show one example of [Car Check Input screen]. Referring to FIGS. 13(A) and 13(B), on this screen in the operator terminal 2, results of the inspections with respect to preset inspection items of the car check can be inputted. The results can be divided based on levels with respect to the respective inspection items, and it is possible to set messages corresponding to the respective levels that are to be printed on the bill, and an additional operation (course). Whether the additional operation is given or not can be set per level of each inspection item. The inputted inspection results of the car check are managed in a way of being related to the receipt data, as car check inspection result data.

On this car check input screen, a customer/car data display module 131 is capable of inputting the customer/car data as the receipt data to which the inspection results of the car check are inputted, and also inputting a person in charge. The items that can be inputted are those excluding [Receipt No.], [Name] of Customer] and [Course]. The items inputted are stored by overwriting at a timing when depressing the function key F6 (OK).

A name-of-inspection-portion/name-of-item display module 132 displays names of set inspection portions and items. The inspection item is displayed with a mark ( ) after the inspection portion. When depressing a defect button 133, there are displayed messages of all the levels set in the inspection items corresponding to columns of the respective buttons, the additional course, and a list showing whether the additional course is charged a fee or free of charge (or a list of amounts of money), and the level can be inputted while referring to this list. If the additional course is free of charge, the operation thereof is conducted. If charged the fee, after confirming the customer as to whether the operation should be conducted or not, this item of data is added to the receipt data.

A car check level input module 134 is capable of inputting a defective portion by depressing a defect level button. A portion that is not set is displayed in blank. Note that the defective portion can also be inputted by depressing directly a button of the car check level input module 134 without depressing the defect button 133. When depressing the up-and-down button 135, the display on the name-of-inspection-portion/name-of-item display module 132 is vertically changed over by one.

When pushing an addition button 136, a screen shown in FIG. 13(B) opens, and respective pieces of data of the inspection items of the car check are edited and can be additionally registered.

### 〈Operation Content Reference Process〉

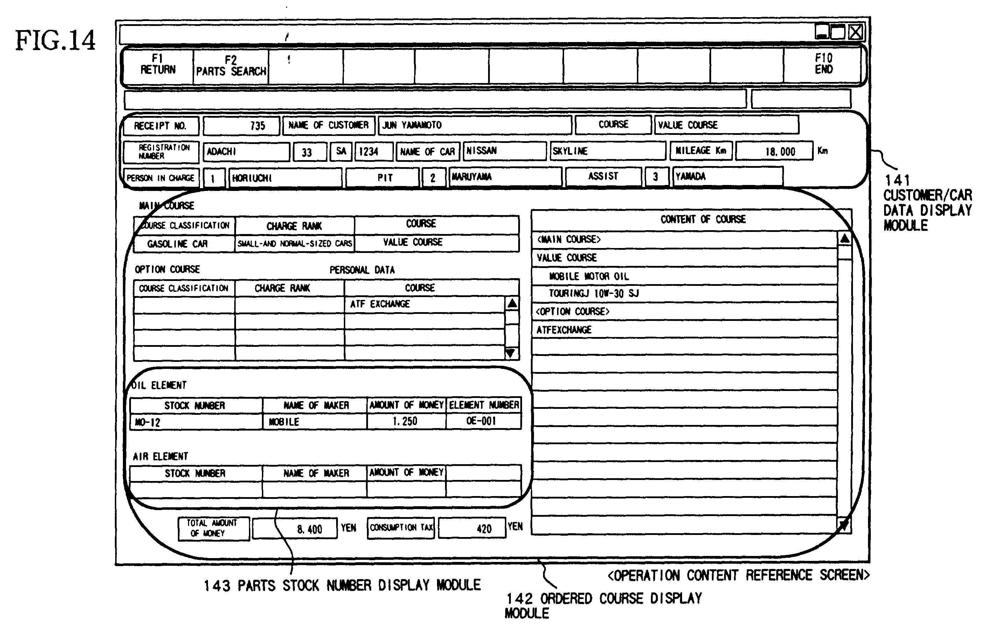

FIG. 14 shows one example of an [Operation Content Reference Screen]. Referring to FIG. 14, a content of the receipt data assuming the selected state on [Receipt State Reference Screen] (see FIG. 12) can be displayed on this operation content reference screen. The operator in the operation pit unit 7 is, before actually carrying out the operation, able to confirm the content of the operation on the operation content reference screen in the operator terminal 2.

A customer/car data display module 141 displays the customer/car data registered in the receipt data on the operation content reference screen. Further, an ordered course display module 142 displays an ordered course of the receipt data assuming the selected state on the receipt state reference screen. This display module 142 also displays a main course selected when received, an option course, a content of the course, a total amount of money and a consumption tax.

A parts stock number display module 143 displays the parts stock number selected on the parts search screen shifted from the receipt screen or the operation content reference screen. The shift to the parts search screen can be attained by, e.g., a function key F2 (search for parts), and the parts of the oil and air elements can be searched.

### 〈Accounting Process〉

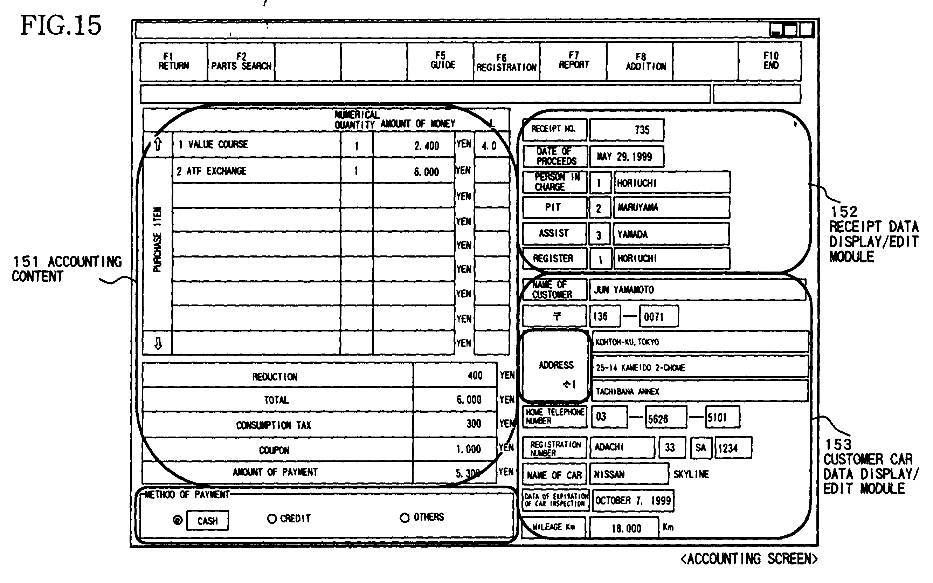

FIG. 15 shows one example of an [Accounting Screen]. Referring to FIG. 15, an accounting process with respect to the receipt data registered on [Receipt Screen (receipt data)] can be executed on the screen in the receipt/accounting terminal 1. When executing the accounting process, a result of the accounting process is inputted as proceeds to a proceeds database DB, and may be, from a different screen, referred to as an achievement of the proceeds on the screen as well as printing the data thereof. A timing when executing the accounting process is given with a trigger of, e.g., registering the bill by pushing the function key F6 (registration) or of issuing the bill by pushing the function key F7 (report).

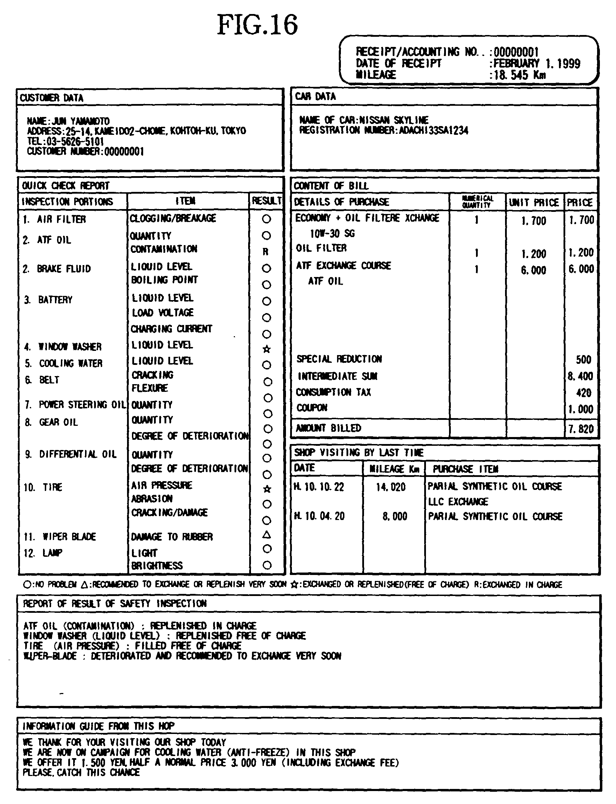

When indicated to issue the bill, as in one example shown in FIG. 16, details of the transaction are printed together with the result of inspection. Note that the issuance of the result of the inspection is indicated by the function key, and the result of the inspection may be printed individually apart from the details of the transaction.

The ordered course registered in the receipt data is displayed as a default man accounting content 151. When manually inputting a numerical value in an item [Numerical Value] in the accounting content 151, this is automatically calculated and is entered in an item [Amount of Money]. Further, as for a display of an item [Reduction] which is not given as a default, the item of the reduction is not displayed till an amount of reduction is inputted.

A receipt data display/edit module 152 is, when a numerical value of the receipt No. is manually inputted to [Receipt No.] in the receipt data as an accounting target, capable of invoking the receipt data as the accounting target. A date on which the accounting is implemented is written to [Date of Proceeds], and, in a state where the present date is inputted as a default, the date may be changed by manual inputting. A name of the person in charge who received the order is inputted to [Person in Charge]. A name of a person in charge who mainly forms the operation is inputted to [Pit]. A name of a person in charge who assists the operation is inputted to [Assist]. Further, a name of a person in charge who executes accounting is inputted to [Register]. Note that the names of the persons in charge in [Pit: and [Assist] can be inputted together with the data about completion of the operation from the operator terminal 2.

A customer/car data display edit module 153 displays customer/car data as the accounting target. In this display/edit module 153, the items other than [Name of Customer] and [Registration Number] may be edited by manual inputting and so on. When the manual-input based edit is carried out, the edited content is overwritten to the customer/car data at a timing when the proceeds are inputted by depressing the function key F6 or F7.

Note that if a check is inputted to [Customer Data Check] on [Customer/Car Data Registration Screen] (unillustrated), a display of an item [Address] is flickered, thus prompting a modification ( 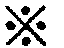 1). Further, if the address is edited in that state and if overwritten to the customer/car data when registering the receipt data, the check on [Customer/Car Data Registration Screen ] disappears, and the display of the item [Address] stops flickering from the next time.

### [Modified Example]

In the embodiments discussed above, the receipt/accounting terminal for performing both of the receipt operation and the accounting operation is disposed at the front in the service transaction shop, however, the present invention can be similarly carried out even when a receipt terminal and an accounting terminal are separately disposed at the front.

Furthermore, the operator terminal provided in the operation pit executes the receipt operation and the service process, and the accounting terminal is disposed in the operation pit, whereby the customer receives the service in a state of being in the car (a drive-through mode).

Although only a few embodiments of the present invention have been described in detail above, those skilled in the art will readily appreciate that many modifications are possible in the preferred embodiments without departing from the novel teachings and advantages of the present invention. Accordingly, all such modifications are intended to be included within the scope of the present invention as defined by the following claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A service transaction information processing system comprising:
a database for storing course classification data for indicating categories of service targets, and service course data for indicating a content of the service and assets used for the service;
a first terminal device including an input module for inputting identification data of the service target, and a course selection module for selecting a course classification with respect to the service target, and selecting a service course corresponding to the selected course classification from the service course data;
a second terminal device including a service target selection module for displaying the service target inputted in said first terminal device and selecting a specified service target, a course display module for displaying a content of the service course corresponding to the specified service target selected by said service target selection module, and a completion data input module for inputting completion-of-service data for indicating that a service corresponding to the specified service target is completed; and
a data transmission medium for connecting said database, said first terminal device and said second terminal device to each other.

2. A service transaction information processing system according to claim 1, wherein said first terminal device further includes a display module for displaying data about the specified service target corresponding to the completion-of-service data inputted in said second terminal device, and an accounting module for selecting the specified service target displayed on said display module and performing accounting of a service transaction.

3. A service transaction information processing system according to claim 2, wherein said second terminal device further includes a diagnosis data input module for inputting diagnosis data divided at a plurality of levels according to diagnosis items with respect to the service target.

4. A service transaction information processing system according to claim 3, wherein said second terminal device further includes a print module for printing a diagnosis message corresponding to the diagnosis data.

5. A service transaction information processing system according to claim 3, wherein said course selection module, when the inputted diagnosis data satisfies a predetermined condition, selects a service course corresponding to the predetermined condition.

6. A service transaction information processing system according to claim 1 or 2, wherein said first terminal device is disposed at a front in a service transaction shop, and
said second terminal device is disposed in an operation pit in the service transaction shop.

7. A service transaction information processing system comprising:
a database for storing course classification data for indicating categories of service targets, and service course data for indicating a content of the service and assets used for the service;
a first terminal device including an input module for inputting identification data of the service target, and a course selection module for selecting a course classification with respect to the service target, and selecting a service course corresponding to the selected course classification from the service course data;
a second terminal device including a service target selection module for displaying the service target inputted in said first terminal device and selecting a specified service target, a course display module for displaying a content of the service course corresponding to the specified service target selected by said service target selection module, and a completion data input module for inputting completion-of-service data for indicating that a service corresponding to the specified service target is completed;
a third terminal device including a display module for displaying data about the specified service target corresponding to the completion-of-service data inputted in said second terminal device, and an accounting module for selecting the specified service target displayed on said display module and performing accounting of a service transaction; and
a data transmission medium for connecting said database, said first terminal device, said second terminal device and said third terminal device to each other.

8. A service transaction information processing system according to claim 7, wherein said second terminal device further includes a diagnosis data input module for inputting diagnosis data divided at a plurality of levels according to diagnosis items with respect to the service target.

9. A service transaction information processing system according to claim 8, wherein said second terminal device further includes a print module for printing a diagnosis message corresponding to the diagnosis data.

10. A service transaction information processing system according to claim 8, wherein said course selection module, when the inputted diagnosis data satisfies a predetermined condition, selects a service course corresponding to the predetermined condition.

11. A service transaction information processing system according to claim 7, wherein said first terminal device and said third terminal device are disposed at a front in a service transaction shop, and
said second terminal device is disposed in an operation pit in the service transaction shop.

12. A service transaction information processing system comprising:
a database for storing course classification data for indicating categories of service targets, and service course data for indicating a content of the service and assets used for the service;
a first terminal device including an input module for inputting identification data of the service target, and a course selection module for selecting a course classification with respect to the service target, and selecting a service course corresponding to the selected course classification from the service course data, a service target selection module for displaying the service target inputted and selecting a specified service target, a course display module for displaying a content of the service course corresponding to the specified service target selected by said service target selection module, and a completion data input module for inputting completion-of-service data for indicating that a service corresponding to the specified service target is completed;
a second terminal device including a display module for displaying data about the specified service target corresponding to the completion-of-service data inputted in said first terminal device, and an accounting module for selecting the specified service target displayed on said display module and performing accounting of a service transaction; and
a data transmission medium for connecting said database, said first terminal device and said second terminal device to each other.

13. A service transaction information processing system according to claim 12, wherein said first terminal device further includes a diagnosis data input module for inputting diagnosis data divided at a plurality of levels according to diagnosis items with respect to the service target.

14. A service transaction information processing system according to claim 13, wherein said first terminal device further includes a print module for printing a diagnosis message corresponding to the diagnosis data.

15. A service transaction information processing system according to claim 13, wherein said course selection module, when the inputted diagnosis data satisfies a predetermined condition, selects a service course corresponding to this predetermined condition.

16. A service transaction information processing system according to claim 12, wherein said first terminal device and said second terminal device are disposed in an operation pit in a service transaction shop.

17. A service transaction information processing system according to claim 1, 7 or 12, further comprising an asset database for storing target category data showing a second category of the service target, asset category data and asset identification data in a way of making these items of data corresponding to each other,
wherein the service target identification data contain the target category data,
the asset data contained in the service course data is at least one of the identification data and the category data, and
said course display module, when the asset data is the category data, obtains identification data of an asset from said asset database on the basis of the service target identification data and the asset data.

18. A service transaction information processing system according to claim 6, 11 or 16, wherein the service transaction shop is any one of an oil shop, an oil supplier and a car goods shop.

19. A service transaction information processing system according to claim 1, 2, 7 or 12, wherein said data transmission medium is a local area network.

20. A service transaction information processing method in a system including a database for storing course classification data for indicating a type of a service target car and service course data for showing a content of the service and an asset used in the service, at least one terminal device disposed at least one of a customer corresponding place and a car corresponding place in a service transaction shop, and a data transmission medium for connecting said database and said terminal device, said method comprising:
a first step of inputting identification data for specifying the service target car;
a second step of selecting the course classification with respect to the service target, and selecting a service course corresponding to the selected course classification from the service course data;
a third step of displaying the inputted service target and selecting a specified service target;
a fourth step of displaying a content of the service course corresponding to the specified service target selected in said third step; and
a fifth step of inputting completion-of-service data for indicating that the service corresponding to the specified service target is completed.

21. A service transaction information processing system according to claim 20, further comprising:
a sixth step of displaying data of the specified service target corresponding to the completion-of-service data inputted in said fifth step; and
a seventh step of performing accounting a service transaction by selecting the specified service target displayed.
